# EUROPEAN PATENT SPECIFICATION

(11) **EP 3 714 136 B1**
(45) Date of publication and mention of the grant of the patent: **16.02.2022**
(21) Application number: 18815033.8
(22) Date of filing: 21.11.2018
(51) Int. Cl.: F01M 5/00, F16N 39/02, F28D 9/00, F28F 9/02, F28F 27/02, F28D 21/00

(54) **OIL TEMPERATURE CONTROL ASSEMBLY**
ÖLTEMPERATURSTEUERUNGSANORDNUNG
ENSEMBLE DE RÉGULATION DE TEMPÉRATURE D'HUILE

(30) Priority: 24.11.2017 IT 201700135086
(43) Date of publication of application: 30.09.2020
(73) Proprietor: Ufi Filters s.p.a., 46047 Porto Mantovano (Mantova) (IT)
(72) Inventor: GIRONDI, Giorgio, 46047 Porto Mantovano Mantova (IT)
(74) Representative: Gamba, Alessandro
(86) International application number: PCT/IB2018/059185
(87) International publication number: WO 2019/102376

(56) References cited:
- EP-A1- 3 184 764
- US-A- 5 499 675
- US-A1- 2006 237 184
- US-A1- 2010 206 516
- US-A1- 2015 129 164

## Description

### Scope

The present invention refers to an oil temperature control assembly.

In particular, the present invention is placed in the automotive sector.

The oil temperature control assembly, object of the present invention, is in effect specifically used in a vehicle, for example, to regulate the temperature of the oil circulating in an oil circulation system. More specifically, the oil temperature control assembly is in effect mountable on the operating group of a vehicle to be fluidically connected to the oil circulation system of said operating group. In particular, an operating group refers to a component or group of components wherein there is an oil circulation system, such as an engine and/or transmission group. Moreover, the oil temperature control assembly, object of the present invention, is also fluidically connectable to a water system of the vehicle, or in general to a cooling system.

### State of the art

In the state of the art, are known solutions for oil temperature control assemblies that are connectable to an oil circulation system and comprises a plate heat exchanger group suitable to perform the operations of oil temperature control.

Oil temperature control assemblies solutions are also known that have specific bypass components, depending on certain characteristics of the oil, such as pressure and viscosity, suitable to prevent the oil from flowing into the exchanger group.

Such solutions, however, have particularly complex geometries and layouts.

In particular, the known solutions have complex layouts of the various ducts through which respectively oil and liquid coolant (such as water or glycol) flow. In effect, in the known solutions, the positioning of the bypass specific components and of the relevant bypass duct have made the components particularly complex where they are provided: for example, there are known embodiments wherein said components are integrated into the plate heat exchanger group, resulting in a particularly complex geometry of said plates and limiting the smaller heat exchange surface area of the plates, thus providing plate heat exchanger groups with a lower thermal power than those wherein said bypass components are not housed; for example, there are also known embodiments of support groups of the heat exchanger group that require a specific design and production for housing such components, being in turn particularly complex in geometry and layout.

For example, some embodiments of oil temperature control assemblies are shown in the documents US5810071 and DE202005017975. Other known embodiments of oil temperature control assemblies is those described in documents US2015/129164A1 and EP3184764A1.

### Solution of the invention

Therefore, the need to provide an oil temperature control assembly that resolves the aforesaid problems is strongly felt.

The purpose of the present invention is to provide an oil temperature control assembly that effectively performs temperature control operations and has bypass components with a simple duct geometry and layout.

Such object is achieved by means of the oil temperature control assembly claimed in claim 1. The claims dependent thereon show preferred variant embodiments involving further advantageous aspects.

### Description of the drawings

Further features and advantages of the invention will become apparent from the following description of its preferred examples of embodiment, given by way of non-limiting example, with reference to the accompanying figures wherein:

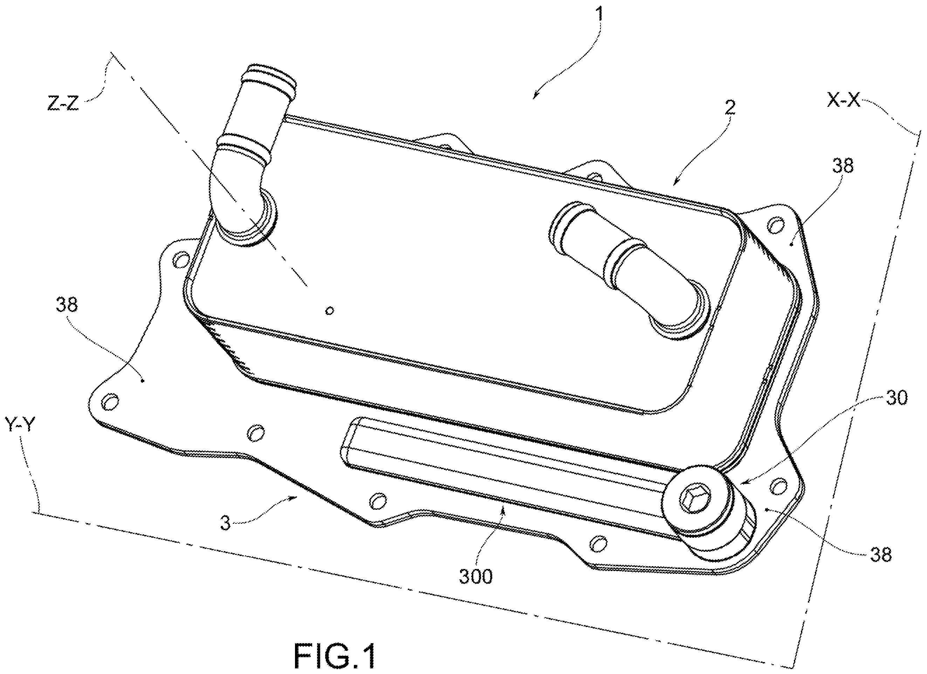

- figure 1 shows a perspective view of the oil temperature control assembly that is the object of present invention, according to a preferred embodiment;
- figure 2 shows a view from the bottom of the oil temperature control assembly shown in figure 1;

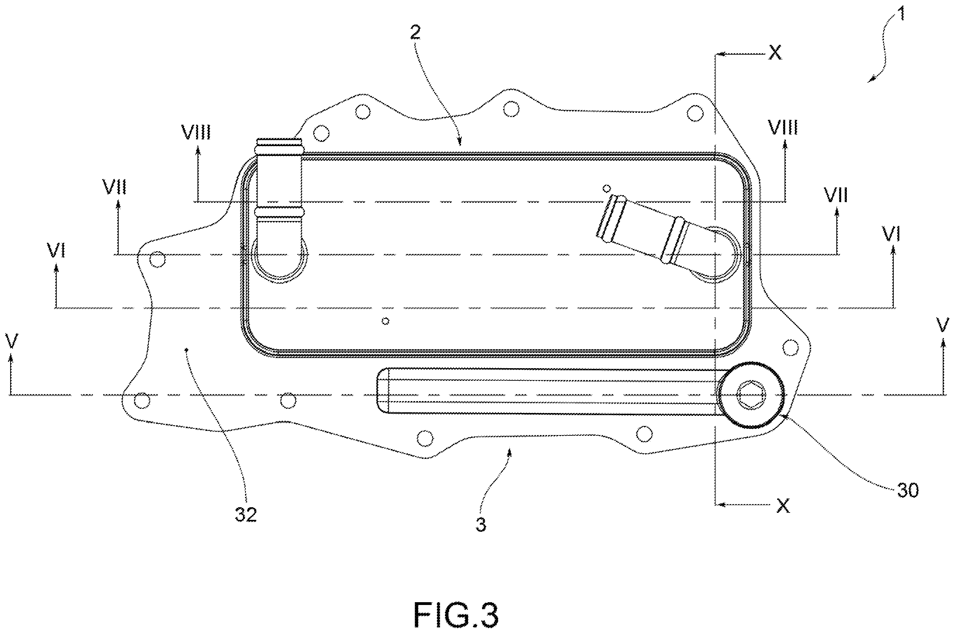

- figure 3 shows a top view of the oil temperature control assembly shown in figure 1;

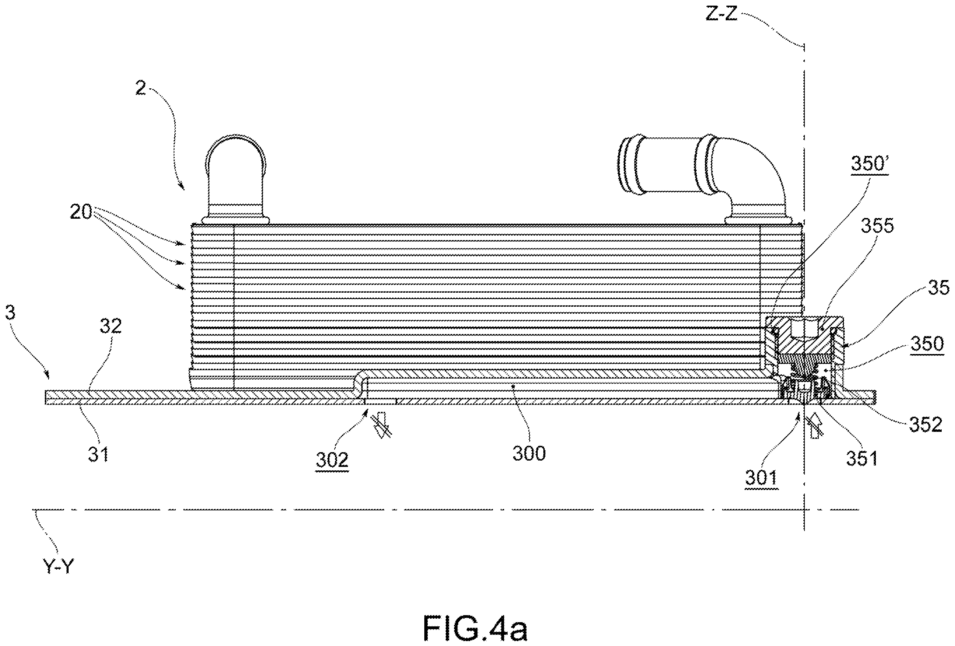

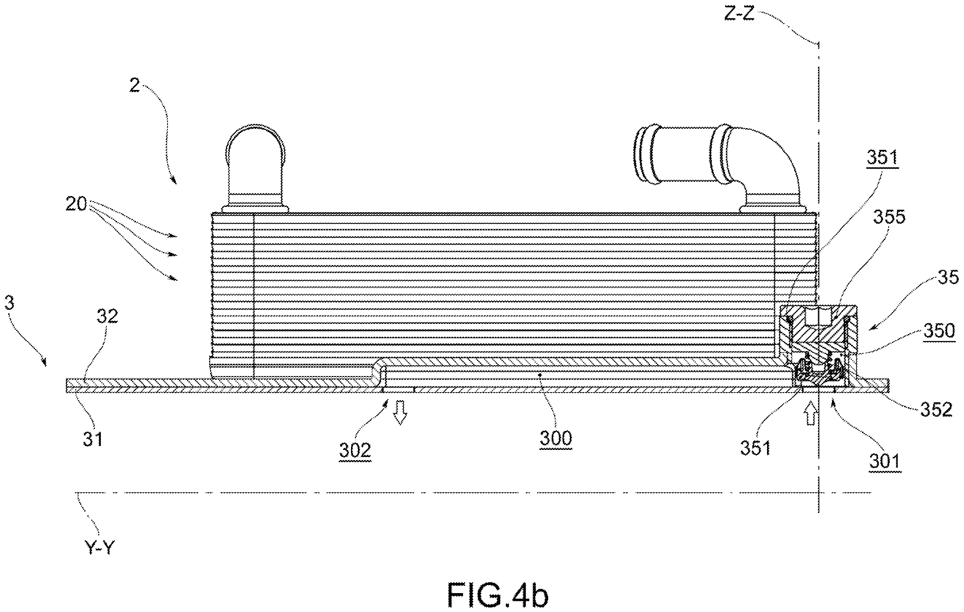

- figures 4a and 4b show two cross-sectional views along the plane V-V shown in figure 3 of the oil temperature control assembly object of the present invention in a closing configuration and a bypass configuration;

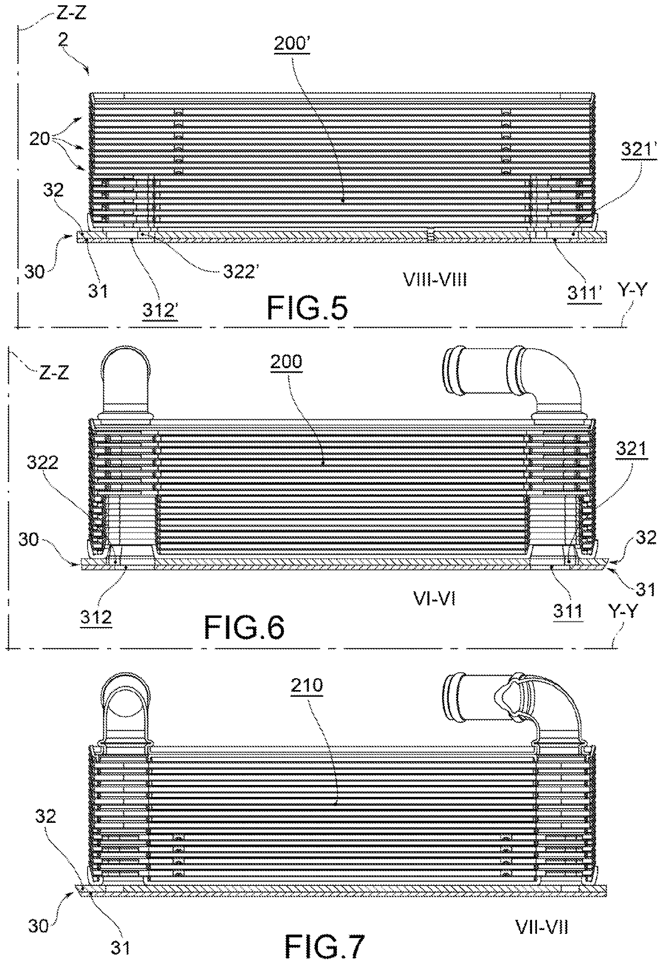

- figure 5 represents a cross-sectional view along the plane VIII-VIII shown in figure 3 of the oil temperature control assembly object of the present invention;
- figure 6 illustrates a cross-sectional view along the plane VI-VI shown in figure 3 of the oil temperature control assembly object of the present invention;
- figure 7 shows a cross-sectional view along the plane VII-VII shown in figure 3 of the oil temperature control assembly object of the present invention;

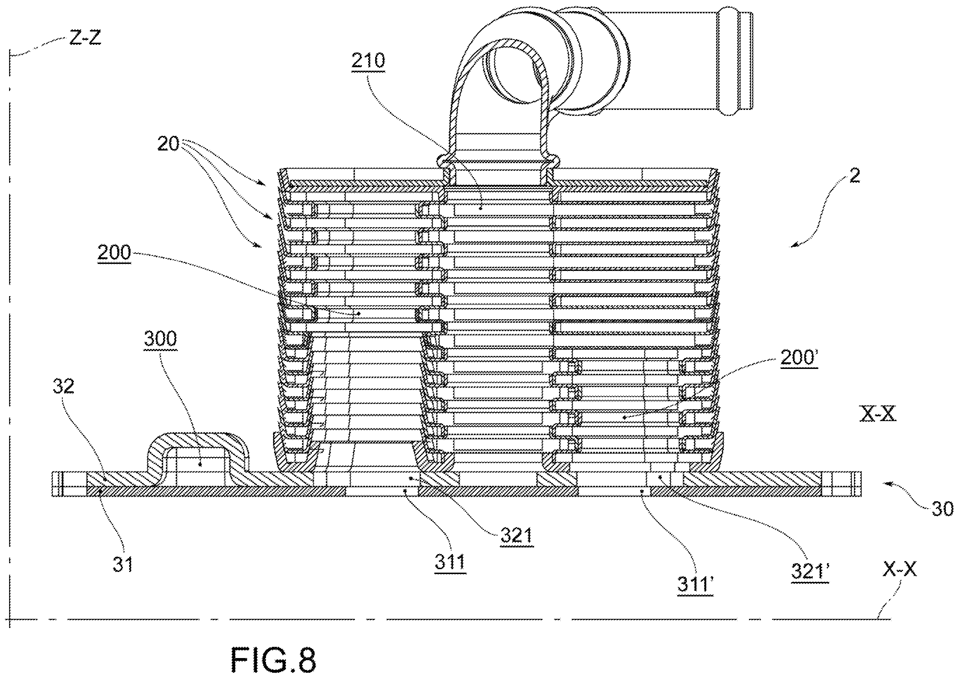

- figure 8 represents a sectional view along the plane X-X shown in figure 3 of the oil temperature control assembly object of the present invention.

### Detailed Description

With reference to the accompanying figures, an oil temperature control assembly according to the present invention is indicated at 1.

In particular, the control assembly object of the present invention, as described in detail below, is mountable to an operating group of a vehicle. Preferably, said operating group is an engine group, e.g. an internal combustion engine, or a transmission group.

According to the present invention, in effect, the oil temperature control assembly 1 object of the present invention is fluidically connectable to an oil circulation system of said operating group and to a cooling system of said operating group or of said vehicle.

According to the present invention, moreover, as shown in a non-limiting manner in the accompanying figures, the oil temperature control assembly 1 identifies a vertical axis Z-Z and two longitudinal axes X-X, Y-Y. In particular, the two longitudinal axes X-X, Y-Y lie on the same imaginary plane which is orthogonal to the vertical axis Z-Z.

Preferably, in the description provided hereinafter, when one refers to position or planar elements, this is intended in relation to said imaginary plane, and thus components with extensions substantially parallel to the plane wherein the longitudinal axes X-X, Y-Y lie are intended. Similarly, in the description provided hereinafter, when referring to vertical overlapping, heights and extensions, reference is made to the direction parallel to or coinciding with the vertical axis Z-Z, and thus orthogonal to the longitudinal axes X-X, Y-Y.

According to the present invention, the oil temperature control assembly 1 comprises a heat exchanger group 2. Preferably, the heat exchanger group 2 is suitable to allow, according to the needs, the temperature of the engine oil to be controlled. For example, as described hereinafter, the assembly 1 has suitable ducts to allow the flow of oil and water to and from the operating group.

The heat exchanger 2 comprises a plurality of plate-shaped exchanger elements 20 which are stackable along the vertical axis Z-Z defining ducts through which the oil or water flows.

Specifically, in effect, such plate-shaped exchanger elements 20 are specially shaped to have special edges and walls that extend vertically orthogonally to the preferential planar extension. In particular, as shown by way of example in the accompanying figures, some plate-shaped exchanger elements 20 have special mouths that, when mutually overlapped, are suitable to define duct sections having vertical extension; in addition, the plate-shaped exchanger elements 20 in the mutual overlapping thereof are suitable for defining longitudinal duct sections.

According to a preferred embodiment of the present invention, the heat exchanger group 2 defines two distinct oil ducts, for example an oil duct 200 and a secondary oil duct 200' suitable to allow the flow of different oils, in addition to the flow of liquid coolant, which takes place in a special water duct 210.

In other words, in the heat exchanger group 2, in addition to water, two different oils may flow, which in the vehicle circulate in two different circuits.

According to such preferred shape, in the heat exchanger, each oil circuit 200, 200' extends in height for a limited portion relative to the total height of the heat exchanger. Preferably, the oil circuits 200, 200' delimited in height with respect to the total height of the exchanger group 2 exchange heat with a single common cooling circuit, which extends for the entire height of the exchanger, alternating with the channels of the two oil circuits.

According to such a preferred embodiment, the oil duct 200 has a longitudinal portion and the secondary oil duct 200' has a secondary longitudinal portion, wherein said longitudinal portion extends in the heat exchanger group 2 at a different height from the secondary longitudinal portion.

Preferably, said plate-shaped exchanger elements 200 are made of metal. Preferably said plate-shaped exchanger elements 200 are made of aluminum alloy or steel. Preferably, said plate-shaped exchanger elements 200 are joined together integrally by means of a brazing operation.

According to a preferred embodiment, the oil inlets and outlets are located at the bottom of the heat exchanger group 2, as described hereinafter and shown in the accompanying figures, and are fluidically connected to the operating group by means of a support and fluid connection group 3; preferably, the water inlets and outlets are located at the top of the heat exchanger group 2.

As already mentioned, the oil temperature control unit 1 object of the present invention comprises, moreover, a support and fluid connection group 3 engageable to the operating group of the vehicle. This means that the support and fluid connection group 3 is attachable directly to the operating group.

Said support and fluid connection group 3 is suitable to support the heat exchanger group 2.

Said support and fluid connection group 3 is suitable for connecting the operating group to the heat exchanger group 2. This means that the support and fluid connection group 3 is directly connectable to the circuits in the operating group.

According to a preferred embodiment, the support and fluid connection group 3 comprises a multi-layer support base 30, comprising plate-shaped elements that are stackable along the vertical axis Z-Z, suitable to engage the operating group and to be engaged by the heat exchanger group 2.

In a preferred embodiment, the multi-layer support base 30 comprises a first plate 31 and a second plate 32.

Said first plate 31 comprises at least one first oil inlet mouth 311, connectable fluidically to the operating group to receive oil. Moreover, said first plate 31 comprises at least a first oil outlet mouth 312 connectable fluidically to the operating group to return oil to the operating group.

Said second plate 32 comprises at least a second oil inlet mouth 321, fluidically connectable to at least the first oil inlet mouth 311 and to the heat exchanger group 2 for the oil inlet. Moreover, said second plate 32 comprises at least a second oil outlet mouth 322 connectable fluidically to the heat exchanger group 2 and to the first oil outlet mouth 312 to return oil to the operating group.

In other words, through said first and second inlet mouths the oil flows out of the operating group into the heat exchanger group 2, while through said first and second outlet mouths the oil flows out of the heat exchanger group 2 into the operating group. Preferably, the oil flows through the oil duct 200 in the heat exchanger group 2.

According to a variant embodiment of the invention wherein the heat exchanger group 2 comprises both an oil duct 200 and a secondary oil duct 200', the first plate 31 and the second plate 32 are shaped to allow the fluid connection between the operating group and the heat exchanger group 2.

In particular, the first plate 31 comprises at least one first secondary oil inlet mouth 311', connectable fluidically to the operating group to receive secondary oil. In addition, the first plate 31 comprises a first secondary oil outlet mouth 312' connectable fluidically to the operating group to return secondary oil.

Similarly, the second plate 32 comprises at least one second secondary oil inlet mouth 321', fluidically connectable to at least one first secondary oil inlet mouth 311' and to the heat exchanger group 2 for the secondary oil inlet. In addition, the second plate 32 comprises at least one second secondary oil outlet mouth 322' connectable fluidically to at least one first secondary oil outlet mouth 312' and to the operating group to return oil.

According to the present invention, the first plate 31 and the second plate 32 define a bypass duct 300 therebetween. Preferably, the oil flows, according to a preferred working configuration of the assembly, into the bypass duct 300 and not into the oil duct 200 of the heat exchanger group 2.

Preferably, in effect, such bypass duct 300 is fluidically connected to said first oil inlet mouth 31.

The bypass duct 300 comprises a bypass inlet mouth 301 and a bypass outlet mouth 302 obtained on said first plate 31.

Preferably, the bypass duct 300 extends along a longitudinal direction, e.g. parallel to a longitudinal axis Y-Y.

According to a preferred embodiment, the bypass inlet mouth 301 is positioned proximal to the first oil inlet mouth 31 while the bypass outlet mouth 302 is proximal to the first oil outlet mouth 32. Preferably, at the first oil inlet mouth 31 and at the bypass inlet mouth 31, a single oil duct of the operating group flows. Preferably, the first oil outlet mouth 32 and the bypass outlet mouth 302 flow into a same oil duct of the operating group.

The support and fluid connection group 3, in addition to the multi-layer support base 30 that defines the bypass duct 300, comprises a valve device 35. The function of said valve device 35 is to control the flow of oil through the bypass duct 300 instead of in the heat exchanger group 2.

The valve device 35, in effect, in the case of high oil pressures and/or excessive oil fluid viscosity, for example due to low temperature, intervenes and controls the flow of oil through the bypass duct 300 instead of through the first oil inlet mouth 311 (bypass configuration).

In particular, the valve device 35 is housed between the first plate 31 and the second plate 32.

Preferably, the valve device 35 extends in a vertical direction. Preferably, the surface of the first plate 31 forms the sealing seat of the valve device on the side opposite to the lower side of the support group 3 which instead engages the operating group. Preferably, the valve device 35 operates in said vertical direction between a closed configuration, wherein it engages and occludes the bypass inlet mouth 301, and a bypass configuration, wherein the oil flows into the bypass duct 300.

As shown by way of example in the accompanying figures, in the assembly 1 object of the present invention, both the bypass duct 300 and the valve device 35 are positioned in an outer area adjacent to the portion of the support and fluid connection group 3 whereon the heat exchanger group 2 is placed. In other words, the valve device 35 and the bypass duct 300 are located in a lateral position next to the heat exchanger group 2. Preferably, the valve device 35 and the bypass duct 300 are positioned on the support and fluid connection group 3 in such a way that their footprint is completely external relative to the footprint of the heat exchanger group 2. 'Footprint' is generally understood to mean the external profile of the bypass duct and the bypass valve seat as they appear from a top view of the temperature control assembly 1.

Moreover, preferably the bypass duct 300 and the valve device 35 extend in height parallel to the heat exchanger group 3.

According to the present invention, the bypass duct 300 and the valve device 35 are substantially defined by the overlap between the first and the second plate 32 where the first plate 31 is essentially flat and the second plate 32 is specially shaped by defining the fluid passages (such as the bypass duct) and the housings of the respective components (such as the valve device).

In other words, the second plate 32 is shaped with protuberances that extend in vertical height defining the bypass duct 300 and the housing of the valve device 35. In other words, the second plate 32 has protrusions on the opposite side to that whereon the operating group is located. According to the present invention, such protrusions extend in height in a direction substantially parallel to the axis Z-Z.

In particular, the support and fluid connection group 3, between the first plate 31 and the second plate 32, has a device seat 350 which has substantially vertical extension from the bypass inlet mouth 301 wherein the valve device 35 is housed.

According to one embodiment, the valve device 35 is closed between the first plate 31 and the second plate 35 housed in the device seat 350 defined therebetween.

According to a preferred embodiment, the support and fluid connection group 3 has an insertion opening 350' positioned in a position opposite the bypass inlet mouth 301 through which the valve device 35 is insertable. In other words, preferably, the valve device 35 is insertable into the device seat 350 through said insertion opening 350'.

According to a preferred embodiment, the insertion opening **350'** is closable by a stopper element 355.

Preferably, the stopper element 355 is separate from the valve device 350.

Preferably, the stopper element 355 is integral to the valve device 350.

According to a preferred embodiment, the valve device 35 comprises a mushroom-shaped element 351 suitable for engaging the bypass inlet mouth 301. Said mushroom-shaped element 351 is translatable axially by the action of the oil under pressure.

In particular, in effect, the valve device 35 comprises an elastically yielding element 352 that operates directly on the mushroom-shaped element 351. Preferably, said elastically yielding element 352 is a helical spring fitted on the stem of the mushroom-shaped element 351.

In other words, on the action of the pressurized oil flowing towards the heat exchanger group 2, i.e. towards the first inlet mouth 311, the bypass inlet mouth 301 is intercepted, and if the action of the oil pressure is greater than the force of the elastically yielding element 352, the mushroom-shaped element 351 is moved axially and the oil flows into the bypass duct 300.

According to a preferred embodiment, the multi-layer base 30 has an attachment portion 38 through which the support and fluid connection group 3 is attachable to the operating group, for example by means of screws through specially shaped mounting through-holes.

According to a further preferred embodiment, the secondary duct 200' is bypassable too. In effect, in a preferred embodiment, the support and fluid connection group 3 described above also comprises a secondary bypass duct and a secondary valve device having the above-described features of the bypass duct 300 and of the valve device 35 fluidically connected to the oil duct 200.

In other words, said multilayer support base 30 defines, between the first plate 31 and the second plate 32, a secondary bypass duct equipped with a secondary bypass inlet mouth and a secondary bypass outlet mouth obtained on said first plate 31 respectively proximal to said first secondary oil inlet mouth 311' and said second secondary oil outlet mouth 322'.

Moreover, the support and fluid connection group 3 comprises a secondary valve device housed between the first plate 31 and the second plate 32 at least partially housed in the secondary bypass duct in such a manner as to control the flow of oil through the secondary bypass duct operating in a closed configuration and in a bypass configuration.

Like the bypass duct 30 and the valve device 35, the secondary bypass duct and the secondary valve device are also positioned in an outer area adjacent to the portion of the support and fluid connection group 3 whereon the heat exchanger group 2 is placed. Preferably, the secondary bypass duct and the secondary valve device are positioned on the opposite side relative to the side where the bypass duct 300 and valve device 35 are positioned.

All the other features described above for the bypass duct 30 and the valve device 35 are mirrored in the secondary bypass duct and the secondary valve device.

Moreover, according to a preferred embodiment, the support and fluid connection group 3 comprises gasket means 39 positioned on the first plate 31 and sealingly engageable by the operating group. By virtue of said gasket means 39 the oil flows are directed to the respective mouths on the first plate 31.

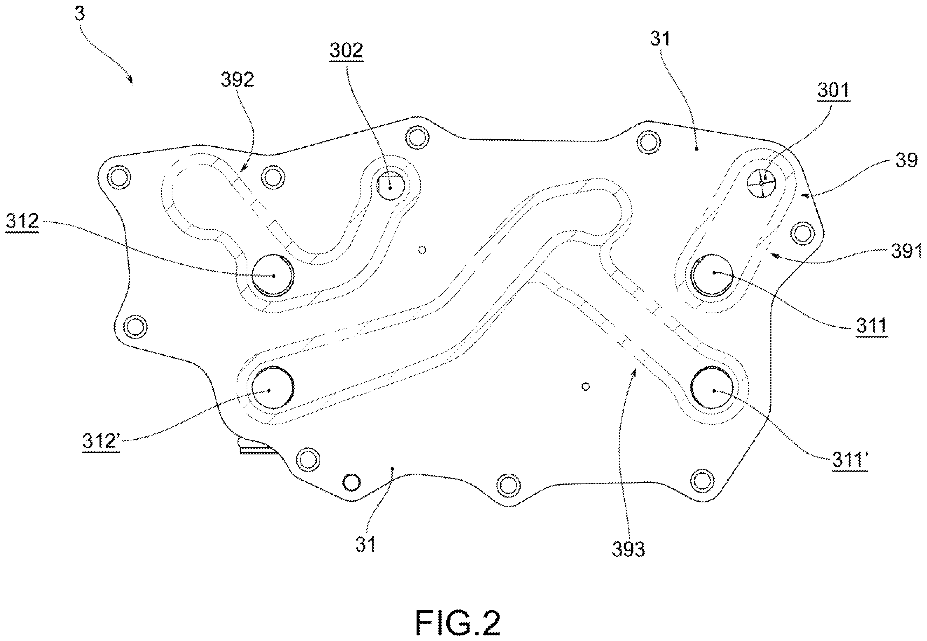

As shown in figure 2, the gasket means 39 comprise an inlet gasket 391 that defines a single fluid duct with bypass inlet mouth 301 and the first oil inlet mouth 311.

Preferably, the gasket means 39 also comprise an outlet gasket 392 defining a single fluid duct, the bypass outlet mouth 302 and the first oil outlet mouth 321.

In addition, the gasket means 39 also comprise a secondary gasket 393 specially shaped for the secondary duct 200' and the respective mouths. At the same time, in the embodiment that provides for a secondary bypass duct, the gasket means 39 comprise a specially configured secondary inlet gasket and secondary outlet gasket, similar to the inlet gasket 391 and an outlet gasket 392.

Moreover, further embodiments of the invention are foreseeable, for example, according to a variant embodiment, the multilayer support base 30 comprises more than two plates. Preferably, in effect, in such embodiment comprises at least one interposed intermediate plate, specially shaped, between the first plate 31 and second plate 32. In particular, said interposed plate has mouths suitable for allowing the flow of oil in accordance with that which is described above.

According to a preferred embodiment, the heat exchanger group 2 and the support and fluid connection group 3 are mutually integrally joinable by means of a brazing operation, preferably in an autoclave.

Innovatively, the oil temperature control assembly largely fulfills the object of the present invention by overcoming the problems typical of the known art.

Advantageously, in effect, the oil temperature control assembly has a particularly simple layout and achieves an effective heat exchange by integrating the possibility of releasing overpressures accumulated on the oil circuit.

Advantageously, the temperature control assembly allows the bypass duct to be integrated into the support group due to the mutual overlapping of the plates that make up the support and fluid connection group.

Advantageously, the integration of the bypass duct in the support and fluid connection group allows one to easily size the cross-section of the bypass duct by checking the pressure drops introduced in the oil circuit.

Advantageously, the bypass duct is positioned beside the heat exchanger, on the surface of the support and fluid connection group opposite the surface that engages the operating group allowing a planar attachment surface to be maintained. Advantageously, this solution makes it possible to simplify the sealing systems (i.e. the gasket means) used for the hermetic attachment of the temperature control assembly to the operating group.

Advantageously, the bypass inlet mouth and the oil inlet mouth, as well as the bypass outlet mouth and the oil outlet mouth, are in fluid communication defined by specific, specially shaped gaskets. Advantageously, no specific fluid connection ducts are created in the support and connection group. Advantageously, the shape of the plates is simplified, and the production cost of the support and fluid connection group is reduced, thus reducing the production cost of the temperature control assembly.

Advantageously, the oil temperature control assembly comprises a plurality of oil ducts therein in thermal exchange with a common refrigeration duct.

Advantageously, a secondary bypass duct is integrable into the oil temperature control assembly to release accumulated overpressures on the secondary oil circuit. Advantageously, each advantage related to the bypass duct is also present in the secondary bypass duct.

Advantageously, the assembly is suitable to have a simple and effective support as well as a simple and effective fluid connection with the operating group.

Advantageously, the valve device finds a simple housing in the support group.

Advantageously, the valve device is easy to insert and remove.

Advantageously, the valve device is easily positionable in a position close to the oil inlet mouth provided on the support group.

Advantageously, the bypass valve may be sized appropriately by carefully checking the cross-section of the inlet opening provided on the support, ensuring the correct opening of the bypass duct when the desired threshold pressure is reached. Advantageously, the operation of the bypass valve is more effective and reliable.

Advantageously, the heat exchanger group does not need a specific production or a specific redesign. Advantageously, the heat exchanger group consists of traditional plates comprising the inlet/outlet openings necessary for the fluid communication between the oil/water circuit ducts, while the bypass duct is easily integrated into the support, next to the plate sequence.

It is clear that one skilled in the art, in order to meet contingent needs, may make changes to the oil temperature control assembly described above, all contained within the scope of protection defined by the following claims.

### List of reference numbers:

- 1: oil temperature control assembly
- 2: heat exchanger group
- 20: plate-shaped exchanger elements
- 200: oil duct
- 200': secondary oil duct
- 210: water duct
- 3: support and fluid connection group
- 30: multi-layer support base
- 31: first plate
- 311: first oil inlet mouth
- 311': first secondary oil inlet mouth
- 312': first oil outlet mouth
- 312': first secondary oil outlet mouth
- 32: second plate
- 321: second oil inlet mouth
- 321': second secondary oil inlet mouth
- 322: second oil outlet mouth
- 322': second secondary oil outlet mouth
- 300: bypass duct
- 301: bypass inlet mouth
- 302: bypass outlet mouth
- 35: valve device
- 350: device seat
- 350': insertion opening
- 351: mushroom-shaped element
- 352: elastically yielding element
- 355: stopper element
- 38: attachment portion
- 39: gasket means
- 391: inlet gasket
- 392: outlet gasket
- 393: secondary gasket
- X-X, Y-Y: longitudinal axes
- Z-Z: vertical axis

## Claims

1. Oil temperature control assembly (1) mountable on an operating group of a vehicle, for example an engine or transmission group, wherein the oil temperature control assembly (1) is fluidically connectable with an oil circulation system of said operating group and with a cooling system of said operating group or of said vehicle, wherein the oil temperature control assembly (1) has a vertical axis (Z-Z) and two longitudinal axes (X-X; Y-Y) lying mutually orthogonal to each other on the same plane orthogonal to said vertical axis (Z-Z), wherein said assembly (1) comprises:
a) a heat exchanger group (2) comprising a plurality of plate-shaped exchanger elements (20) overlapping along the vertical axis (Z-Z) defining mutually alternating ducts through which oil and/or cooling liquid flow;
b) a support and fluid connection group (3) engageable to the operating group of the vehicle and supporting the heat exchanger group (2), wherein the support and fluid connection group (3) is suitable to place the operating group with the heat exchanger group (2) in fluid connection and comprises:
i) a multilayer support base (30) composed of plate-shaped elements overlapping along the vertical axis (Z-Z) comprising:
- a first plate (31) comprising at least one first oil inlet mouth (311) fluidically connectable to the operating group to receive oil and at least one first oil outlet mouth (312) connectable fluidically to the operating group to return oil, wherein the first plate (31) has a substantially planar shape, engaging the operating group in a planar manner;
- a second plate (32) comprising at least one second oil inlet mouth (321) fluidically connectable to the at least one first oil inlet mouth (311) and the heat exchanger group (2) for the entrance of the oil into the heat exchanger group (2) and at least one second oil outlet mouth (322) fluidically connectable to at least one first oil outlet mouth (312) and to the operating group to return the oil in output from the heat exchanger group (2), wherein the second plate (32) is specially shaped, defining fluidic passages and housings, protruding on the opposite side with respect to the operating group, parallel to the vertical axis (Z-Z); wherein the overlap along the vertical axis (Z-Z) between the first plate (31) and the second plate (32) defines a bypass duct (300), wherein the bypass duct (300) comprises a bypass inlet mouth (301) and a bypass outlet mouth (302) made on said first plate (31);
ii) a valve device (35), housed between the first plate (31) and the second plate (32), at least partially housed in the bypass duct (300) in such a manner as to control the flow of oil through the bypass duct (300) operating in a closed configuration and in a bypass configuration; wherein the bypass duct (300) and the valve device (35) are positioned in an outer area adjacent to the portion of the support and fluid connection group (3) whereon the heat exchanger group (2) is placed.

2. The assembly (1) according to claim 1, wherein said valve device (35) extends and operates in the vertical direction, wherein in the closed configuration it engages and occludes the bypass inlet mouth (301), and wherein in the bypass configuration it is spaced from the bypass inlet mouth (301) so that the oil flows into the bypass duct (300).

3. The assembly (1) according to claim 2, wherein the bypass duct (300) and the valve device (35) extend in height parallel to the heat exchanger group (3).

4. The assembly (1) according to any of the preceding claims, wherein the bypass duct (300) extends in a longitudinal direction, for example parallel to a longitudinal axis (Y-Y), preferably having the bypass inlet mouth (301) proximal to the first oil inlet mouth (311) and the bypass outlet mouth (302) proximal to the first oil outlet mouth (32).

5. The assembly (1) according to any of the preceding claims, wherein the support and fluid connection group (3) comprises gasket means (39) positioned on the first plate (31) and sealingly engageable by the operating group.

6. The assembly (1) according to claim 5, wherein the gasket means (39) comprise an inlet gasket (391) that defines a unique fluid duct with the bypass inlet mouth (301) and the first oil inlet mouth (311) and/or comprises an outlet gasket (392) which defines a unique fluid duct with the bypass outlet mouth (302) and the first oil outlet mouth (321).

7. The assembly (1) according to any of the preceding claims, wherein the multilayer support base (30) comprises at least an intermediate plate, suitably shaped, interposed between the first plate (31) and second plate (32).

8. The assembly (1) according to any of the preceding claims, wherein the valve device (35) comprises a mushroom-shaped element (351) and an elastically yielding element (352) mutually movable in the axial direction by the action of the oil pressure.

9. The assembly (1) according to any one of the preceding claims, wherein the support and fluid connection group (3), between the first plate (31) and the second plate (32), has a device seat (350) which extends substantially vertically from the bypass inlet mouth (301) wherein the valve device (35) is housed.

10. The assembly (1) according to any of the preceding claims, wherein the support and fluid connection group (3) has an insertion opening (350') positioned in a position opposite the bypass inlet mouth (301) through which the valve device (35) is insertable.

11. The assembly (1) according to claim 10, wherein said insertion opening (350') is closable by a stopper element (355), wherein the stopper element (355) is separate from the valve device (350) or is integral with the valve device (350).

12. The assembly (1) according to any of the preceding claims, wherein the heat exchanger group (2) defines two distinct oil ducts, for example, an oil duct (200) and a secondary oil duct (200'), suitable to allow the flow of different oils, as well as a duct for the circulation of water.

13. The assembly (1) according to claim 12, wherein the oil duct (200) has a longitudinal portion and the secondary oil duct (200') has a secondary longitudinal portion, wherein said longitudinal portion extends in the heat exchanger group (2) at a different height from the secondary longitudinal portion.

14. The assembly (1) according to claim 12 or claim 13, wherein the first plate (31) comprises at least one first secondary oil inlet mouth (311') connectable fluidically to the operating group to receive secondary oil and at least one first secondary oil outlet mouth (312') fluidically connectable to the operating group to return the secondary oil and wherein the second plate (32) comprises at least one second secondary oil inlet mouth (321') fluidically connectable to the at least one first secondary oil inlet mouth (311') and to the heat exchanger group (2) for the input of secondary oil to the heat exchanger group (2) and at least one second secondary oil outlet mouth (322') fluidically connectable to the at least one first secondary oil outlet mouth (312') and to the operating group to return outgoing oil from the heat exchanger group (2).

15. The assembly (1) according to claim 14, wherein said multilayer support base (30) defines, between the first plate (31) and the second plate (32) a secondary bypass duct equipped with a secondary bypass inlet mouth and a secondary bypass outlet mouth made on said first plate (31), respectively, proximal to said first secondary oil inlet mouth (311') and to said second secondary oil outlet mouth (322'), wherein the support and fluid connection group (3) comprises a secondary valve device, housed between the first plate (31) and the second plate (32) at least partially housed in the secondary bypass duct in such a way as to control the flow of oil through the secondary bypass duct operating in a closed configuration and in a bypass configuration;
wherein the secondary bypass duct and the secondary valve device are positioned in an outer area adjacent to the portion of the support and fluid connection group (3) whereon the heat exchanger group (2) is placed, preferably on the opposite side to that whereon the bypass duct (300) and the valve device (35) are placed.

16. The assembly (1) according to any one of the preceding claims, wherein the heat exchanger group (2) and the support and fluid connection group (3) may be mutually integrally joined by means of a brazing operation, preferably in an autoclave.

## Patentansprüche

1. Öltemperatursteuerungs- bzw. -regelungsanordnung (1), die an einer Betriebsgruppe eines Fahrzeugs, beispielsweise einer Motor- oder Getriebegruppe, montierbar ist, wobei die Öltemperatursteuerungs- bzw. -regelungsanordnung (1) mit einem Ölkreislaufsystem der Betriebsgruppe und mit einem Kühlsystem der Betriebsgruppe oder des Fahrzeugs fluidisch verbindbar ist, wobei die Öltemperatursteuerungs- bzw.
- regelungsanordnung (1) eine vertikale Achse (Z-Z) und zwei Längsachsen (X-X; Y-Y) aufweist, die zueinander orthogonal auf derselben Ebene orthogonal zu der vertikalen Achse (Z-Z) liegen, wobei die Anordnung (1) umfasst:
a) eine Wärmetauschergruppe (2), die eine Mehrzahl von plattenförmigen Tauscherelementen (20) umfasst, die sich entlang der vertikalen Achse (Z-Z) überlappen und gegenseitig alternierende Kanäle definieren, durch die Öl und/oder Kühlflüssigkeit fließen;
b) eine Stütz- bzw. Träger- und Fluidverbindungsgruppe (3), die mit der Betriebsgruppe des Fahrzeugs in Eingriff bringbar ist und die Wärmetauschergruppe (2) stützt bzw. trägt, wobei die Träger- und Fluidverbindungsgruppe (3) geeignet ist, die Betriebsgruppe mit der Wärmetauschergruppe (2) in Fluidverbindung zu platzieren, und umfasst:
i) eine mehrschichtige Stütz- bzw. Trägerbasis (30), die aus plattenförmigen Elementen besteht, die sich entlang der vertikalen Achse (Z-Z) überlappen, umfassend:
- eine erste Platte (31), die zumindest eine erste Öleinlassöffnung (311), die mit der Betriebsgruppe fluidisch verbindbar ist, um Öl aufzunehmen, und zumindest eine erste Ölauslassöffnung (312) umfasst, die fluidisch mit der Betriebsgruppe verbindbar ist, um Öl zurückzuführen, wobei die erste Platte (31) eine im Wesentlichen planare Form aufweist, die in die Betätigungsgruppe auf planare Weise eingreift;
- eine zweite Platte (32), die zumindest eine zweite Öleinlassöffnung (321), die mit der zumindest einen ersten Öleinlassöffnung (311) und der Wärmetauschergruppe (2) für den Eintritt des Öls in die Wärmetauschergruppe (2) fluidisch verbindbar ist, und zumindest eine zweite Ölauslassöffnung (322) umfasst, die mit zumindest einer ersten Ölauslassöffnung (312) und mit der Betriebsgruppe fluidisch verbindbar ist, um das von der Wärmetauschergruppe (2) ausgegebene Öl zurückzuführen, wobei die zweite Platte (32) speziell geformt ist und Fluiddurchgänge und Gehäuse definiert, die auf der gegenüberliegenden bzw. entgegengesetzten Seite in Bezug auf die Betätigungsgruppe parallel zu der vertikalen Achse (Z-Z) vorspringen;
wobei die Überlappung entlang der vertikalen Achse (Z-Z) zwischen der ersten Platte (31) und der zweiten Platte (32) einen Bypasskanal (300) definiert, wobei der Bypasskanal (300) eine Bypasseinlassöffnung (301) und eine Bypassauslaßöffnung (302) umfasst, der bzw. die an der ersten Platte (31) hergestellt ist bzw. sind;
ii) eine Ventilvorrichtung (35), die zwischen der ersten Platte (31) und der zweiten Platte (32) untergebracht ist, und zwar zumindest teilweise in dem Bypasskanal (300) derart untergebracht, dass sie den Ölfluss durch den Bypasskanal (300) steuert bzw.
regelt, der in einer geschlossenen Konfiguration und in einer Bypasskonfiguration arbeitet;
wobei der Bypasskanal (300) und die Ventilvorrichtung (35) in einem äußeren Bereich benachbart bzw. angrenzend zu dem Abschnitt der Träger- und Fluidverbindungsgruppe (3) positioniert sind, auf dem die Wärmetauschergruppe (2) platziert ist.

2. Anordnung (1) nach Anspruch 1, wobei sich die Ventilvorrichtung (35) in der vertikale Richtung erstreckt und arbeitet, wobei sie in der geschlossenen Konfiguration in die Bypasseinlassöffnung (301) eingreift und diese verschließt, und wobei sie in der Bypasskonfiguration von der Bypasseinlassöffnung (301) beabstandet ist, so dass das Öl in den Bypasskanal (300) fließt.

3. Anordnung (1) nach Anspruch 2, wobei sich der Bypasskanal (300) und die Ventilvorrichtung (35) in der Höhe parallel zu der Wärmetauschergruppe (3) erstrecken.

4. Anordnung (1) nach einem der vorhergehenden Ansprüche, wobei sich der Bypasskanal (300) in einer Längsrichtung erstreckt, beispielsweise parallel zu einer Längsachse (Y-Y), wobei vorzugsweise die Bypasseinlassöffnung (301) proximal zu der ersten Öleinlassöffnung (311) ist und die Bypassauslassöffnung (302) proximal zu der ersten Ölauslassöffnung (32) ist.

5. Anordnung (1) nach einem der vorhergehenden Ansprüche, wobei die Träger- und Fluidverbindungsgruppe (3) Dichtungsmittel (39) umfasst, die auf der ersten Platte (31) positioniert sind und durch die Betätigungsgruppe abdichtend in Eingriff nehmbar sind.

6. Anordnung (1) nach Anspruch 5, wobei die Dichtungsmittel (39) eine Einlassdichtung (391), die einen einzigartigen Fluidkanal mit der Bypasseinlassöffnung (301) und der ersten Öleinlassöffnung (311) definiert, und/oder eine Auslassdichtung (392) umfassen, die einen einzigartigen Fluidkanal mit der Bypassauslassöffnung (302) und der ersten Ölauslassöffnung (321) definiert.

7. Anordnung (1) nach einem der vorhergehenden Ansprüche, wobei die mehrschichtige Trägerbasis (30) zumindest eine geeignet geformte Zwischenplatte umfasst, die zwischen der ersten Platte (31) und der zweiten Platte (32) angeordnet ist.

8. Anordnung (1) nach einem der vorhergehenden Ansprüche, wobei die Ventilvorrichtung (35) ein pilzförmiges Element (351) und ein elastisch nachgebendes Element (352) umfasst, die durch die Aktion bzw. Wirkung des Öldrucks in der axialen Richtung zu- bzw. gegeneinander bewegbar sind.

9. Anordnung (1) nach einem der vorhergehenden Ansprüche, wobei die Träger- und Fluidverbindungsgruppe (3) zwischen der ersten Platte (31) und der zweiten Platte (32) einen Vorrichtungssitz (350) aufweist, der sich im Wesentlichen vertikal von der Bypasseinlassöffnung (301) erstreckt, in der die Ventilvorrichtung (35) untergebracht ist.

10. Anordnung (1) nach einem der vorhergehenden Ansprüche, wobei die Träger- und Fluidverbindungsgruppe (3) eine Einsetzöffnung (350') aufweist, die in einer Position gegenüberliegend bzw. entgegengesetzt zu der Bypasseinlassöffnung (301) positioniert ist und durch die die Ventilvorrichtung (35) ist einsetzbar ist.

11. Anordnung (1) nach Anspruch 10, wobei die Einsetzöffnung 350') durch ein Stopperelement (355) verschließbar ist, wobei das Stopperelement (355) von der Ventilvorrichtung (350) getrennt ist oder einstückig bzw. integral mit der Ventilvorrichtung (350) ist.

12. Anordnung (1) nach einem der vorhergehenden Ansprüche, wobei die Wärmetauschergruppe (2) zwei unterschiedliche Ölkanäle, und zwar beispielsweise einen Ölkanal (200) und einen Sekundärölkanal (200'), die geeignet sind, den Fluss verschiedener Öle zu erlauben, sowie einen Kanal für die Zirkulation von Wasser definiert.

13. Anordnung (1) nach Anspruch 13, wobei der Ölkanal (200) einen Längsabschnitt aufweist und der Sekundärölkanal (200') einen Sekundärlängsabschnitt aufweist, wobei sich der Längsabschnitt in der Wärmetauschergruppe (2) auf einer von dem Sekundärlängsabschnitt unterschiedlichen Höhe erstreckt.

14. Anordnung (1) nach Anspruch 12 oder Anspruch 13, wobei die erste Platte (31) zumindest eine erste Sekundäröleinlassöffnung (311'), die mit der Betriebsgruppe fluidisch verbindbar ist, um Sekundäröl aufzunehmen, und zumindest eine erste Sekundärölauslassöffnung (312') umfasst, die mit der Betriebsgruppe fluidisch verbindbar ist, um das Sekundäröl zurückzuführen, und wobei die zweite Platte (32) zumindest eine zweite Sekundäröleinlassöffnung (321'), die mit der zumindest einen ersten Sekundäröleinlassöffnung (311') und der Wärmetauschergruppe (2) zum Einbringen von Sekundäröl in die Wärmetauschergruppe (2) fluidisch verbindbar ist, und zumindest eine zweite Sekundärölaustrittsöffnung (322') umfasst, die mit der zumindest einen ersten Sekundärölauslassöffnung (312') und der Betriebsgruppe fluidisch verbindbar ist, um aus der Wärmetauschergruppe (2) abgehendes Öl zurückzuführen.

15. Anordnung (1) nach Anspruch 14, wobei die mehrschichtige Trägerbasis (30) zwischen der ersten Platte (31) und der zweiten Platte (32) einen Sekundärbypasskanal definiert, der mit einer Sekundärbypasseinlassöffnung und einer Sekundärbypassauslassöffnung ausgestattet ist, die an der ersten Platte (31) proximal zu der ersten Sekundäröleinlassöffnung (311') bzw. der zweiten Sekundärölauslassöffnung (322') hergestellt sind, wobei die Träger- und Fluidverbindungsgruppe (3) umfasst: eine Sekundärventilvorrichtung, die zwischen der ersten Platte (31) und der zweiten Platte (32) untergebracht ist, und zwar zumindest teilweise in dem Sekundärebypasskanal derart untergebracht, dass sie den Ölfluss durch den Sekundärenbypasskanal steuert bzw. regelt, der in einer geschlossenen Konfiguration und in einer Bypasskonfiguration arbeitet;
wobei der Sekundärbypasskanal und die Sekundärventilvorrichtung in einem äußeren Bereich benachbart bzw. angrenzend zu dem Abschnitt der Träger- und Fluidverbindungsgruppe (3) positioniert sind, auf dem die Wärmetauschergruppe (2) platziert ist, und zwar vorzugsweise auf der gegenüberliegenden bzw. entgegengesetzten Seite zu derjenigen, auf welcher der Bypasskanal (300) und die Ventilvorrichtung (35) platziert sind.

16. Anordnung (1) nach einem der vorhergehenden Ansprüche, wobei die Wärmetauschergruppe (2) und die Träger- und Fluidverbindungsgruppe (3) mittels eines Hartlötvorgangs, vorzugsweise in einem Autoklaven, miteinander einstückig bzw. integral verbunden werden können.

## Revendications

1. Ensemble de régulation de température d'huile (1) conçu pour être monté sur un groupe opérationnel d'un véhicule, par exemple un groupe de moteur ou de transmission, dans lequel l'ensemble de régulation de température d'huile (1) est conçu pour être mis en communication fluidique avec un système de circulation d'huile dudit groupe opérationnel et avec un système de refroidissement dudit groupe opérationnel ou dudit véhicule, dans lequel l'ensemble de régulation de température d'huile (1) identifie un axe vertical (Z-Z) et deux axes longitudinaux (X-X ; Y-Y) étant mutuellement orthogonaux l'un par rapport à l'autre sur le même plan orthogonal audit axe vertical (Z-Z), dans lequel ledit ensemble (1) comprend :
a) un groupe échangeur de chaleur (2) comprenant une pluralité d'éléments d'échangeur en forme de plaque (20) se chevauchant le long de l'axe vertical (Z-Z) définissant des conduits mutuellement alternés à travers lesquels l'huile et/ou le liquide de refroidissement s'écoulent ;
b) un groupe de support et de communication fluidique (3) conçu pour être mis en prise avec le groupe opérationnel du véhicule et supportant le groupe échangeur de chaleur (2), dans lequel le groupe de support et de communication fluidique (3) est approprié pour placer le groupe opérationnel avec le groupe échangeur de chaleur (2) en communication fluidique comprenant :
i) une base de support multicouche (30) composée d'éléments en forme de plaque se chevauchant le long de l'axe vertical (Z-Z) comprenant :
- une première plaque (31) comprenant au moins une première bouche d'entrée d'huile (311) conçue pour être mise en communication fluidique avec le groupe opérationnel pour recevoir de l'huile et au moins une première bouche de sortie d'huile (312) conçue pour être mise en communication fluidique avec le groupe opérationnel pour renvoyer l'huile, dans lequel la première plaque (31) présente une forme sensiblement plane, venant en prise avec le groupe opérationnel d'une manière plane ;
- une seconde plaque (32) comprenant au moins une seconde bouche d'entrée d'huile (321) conçue pour être mise en communication fluidique avec l'au moins une première bouche d'entrée d'huile (311) et le groupe échangeur de chaleur (2) pour l'admission de l'huile dans le groupe échangeur de chaleur (2) et au moins une seconde bouche de sortie d'huile (322) conçue pour être mise en communication fluidique avec au moins une première bouche de sortie d'huile (312) et avec le groupe opérationnel pour renvoyer l'huile dans la sortie provenant du groupe échangeur de chaleur (2), dans lequel la seconde plaque (32) est d'une forme spéciale définissant des passages fluidiqueset des logements, faisant saillie sur le côté opposé par rapport au groupe opérateur, parallèlement à l'axe vertical (Z-Z) ;
dans lequel la zone de superposition le long de l'axe vertical (Z-Z) entre la première plaque (31) et la seconde plaque (32) définit un conduit de dérivation (300), dans lequel le conduit de dérivation (300) comprend une bouche d'entrée de dérivation (301) et une bouche de sortie de dérivation (302) réalisées sur ladite première plaque (31) ;
ii) un dispositif de soupape (35), logé entre la première plaque (31) et la seconde plaque (32), au moins partiellement logé dans le conduit de dérivation (300) de manière à réguler l'écoulement de l'huile à travers le conduit de dérivation (300) opérant dans une configuration fermée et dans une configuration de dérivation ;
dans lequel le conduit de dérivation (300) et le dispositif de soupape (35) sont positionnés dans une zone externe adjacente à la partie du groupe de support et de communication fluidique (3) sur laquelle le groupe échangeur de chaleur (2) est placé.

2. Ensemble (1) selon la revendication 1, dans lequel ledit dispositif de soupape (35) s'étend et opère dans la direction verticale, dans lequel dans la configuration fermée il vient en prise et occlut la bouche d'entrée de dérivation (301), et dans lequel dans la configuration de dérivation il est espacé de la bouche d'entrée de dérivation (301) de sorte que l'huile s'écoule dans le conduit de dérivation (300).

3. Ensemble (1) selon la revendication 2, dans lequel le conduit de dérivation (300) et le dispositif de soupape (35) s'étendent en hauteur parallèlement au groupe échangeur de chaleur (3).

4. Ensemble (1) selon l'une quelconque des revendications précédentes, dans lequel le conduit de dérivation (300) s'étend dans une direction longitudinale, par exemple parallèle à un axe longitudinal (Y-Y), ayant de préférence la bouche d'entrée de dérivation (301) à proximité de la première bouche d'entrée d'huile (311) et la bouche de sortie de dérivation (302) à proximité de la première bouche de sortie d'huile (32).

5. Ensemble (1) selon l'une quelconque des revendications précédentes, dans lequel le groupe de support et de communication fluidique (3) comprend un moyen de joint d'étanchéité (39) positionné sur la première plaque (31) et conçue pour être mis en prise de manière étanche par le groupe opérationnel.

6. Ensemble (1) selon la revendication 5, dans lequel le moyen de joint d'étanchéité (39) comprend un joint d'étanchéité d'entrée (391) qui définit un conduit de fluide unique avec la bouche d'entrée de dérivation (301) et la première bouche d'entrée d'huile (311) et/ou comprend un joint d'étanchéité de sortie (392) qui définit un conduit de fluide unique avec la bouche de sortie de dérivation (302) et la première bouche de sortie d'huile (321).

7. Ensemble (1) selon l'une quelconque des revendications précédentes, dans lequel la base de support multicouche (30) comprend au moins une plaque intermédiaire, de forme appropriée, interposée entre la première plaque (31) et la seconde plaque (32).

8. Ensemble (1) selon l'une quelconque des revendications précédentes, dans lequel le dispositif de soupape (35) comprend un élément en forme de champignon (351) et un élément élastiquement flexible (352) mutuellement mobiles dans la direction axiale par l'action de la pression d'huile.

9. Ensemble (1) selon l'une quelconque des revendications précédentes, dans lequel le groupe de support et de communication fluidique (3), entre la première plaque (31) et la seconde plaque (32), a un siège de dispositif (350) qui s'étend sensiblement verticalement à partir de la bouche d'entrée de dérivation (301) dans lequel le dispositif de soupape (35) est logé.

10. Ensemble (1) selon l'une quelconque des revendications précédentes, dans lequel le groupe de support et de communication fluidique (3) a une ouverture d'insertion (350') positionnée dans une position opposée à la bouche d'entrée de dérivation (301) à travers laquelle le dispositif de soupape (35) est conçu pour être inséré.

11. Ensemble (1) selon la revendication 10, dans lequel ladite ouverture d'insertion (350') est conçue pour être fermée par un élément d'obturation (355), dans lequel l'élément d'obturation (355) est séparé du dispositif de soupape (350) ou fait partie intégrante du dispositif de soupape (350).

12. Ensemble (1) selon l'une quelconque des revendications précédentes, dans lequel le groupe échangeur de chaleur (2) définit deux conduits d'huile distincts, par exemple, un conduit d'huile (200) et un conduit d'huile secondaire (200'), appropriés pour permettre l'écoulement de différentes huiles, ainsi qu'un conduit pour la circulation d'eau.

13. Ensemble (1) selon la revendication 12, dans lequel le conduit d'huile (200) a une partie longitudinale et le conduit d'huile secondaire (200') a une partie longitudinale secondaire, dans lequel ladite partie longitudinale s'étend dans le groupe échangeur de chaleur (2) à une hauteur différente de la partie longitudinale secondaire.

14. Ensemble (1) selon la revendication 12 ou la revendication 13, dans lequel la première plaque (31) comprend au moins une première bouche d'entrée d'huile secondaire (311') conçue pour être mise en communication fluidique avec le groupe opérationnel pour recevoir une huile secondaire et au moins une première bouche de sortie d'huile secondaire (312') conçue pour être mise en communication fluidique avec le groupe opérationnel pour renvoyer l'huile secondaire et dans lequel la seconde plaque (32) comprend au moins une seconde bouche d'entrée d'huile secondaire (321') conçue pour être mise en communication fluidique avec l'au moins une première bouche d'entrée d'huile secondaire (311') et avec le groupe échangeur de chaleur (2) pour l'entrée d'huile secondaire dans le groupe échangeur de chaleur (2) et au moins une seconde bouche de sortie d'huile secondaire (322') conçue pour être mise en communication fluidique avec l'au moins une première bouche de sortie d'huile secondaire (312') et avec le groupe opérationnel pour renvoyer l'huile sortante provenant du groupe échangeur de chaleur (2).

15. Ensemble (1) selon la revendication 14, dans lequel ladite base de support multicouche (30) définit, entre la première plaque (31) et la seconde plaque (32), un conduit de dérivation secondaire équipé d'une bouche d'entrée de dérivation secondaire et d'une bouche de sortie de dérivation secondaire réalisées sur ladite première plaque (31), respectivement, à proximité de ladite première bouche d'entrée d'huile secondaire (311') et de ladite seconde bouche de sortie d'huile secondaire (322'), dans lequel le groupe de support et de communication fluidique (3) comprend un dispositif de soupape secondaire, logé entre la première plaque (31) et la seconde plaque (32) au moins partiellement logé dans le conduit de dérivation secondaire de manière à réguler l'écoulement de l'huile à travers le conduit de dérivation secondaire opérant dans une configuration fermée et dans une configuration de dérivation ;
dans lequel le conduit de dérivation secondaire et le dispositif de soupape secondaire sont positionnés dans une zone externe adjacente à la partie du groupe de support et de communication fluidique (3) sur laquelle le groupe échangeur de chaleur (2) est placé, de préférence sur le côté opposé à celui sur lequel le conduit de dérivation (300) et le dispositif de soupape (35) sont placés.

16. Ensemble (1) selon l'une quelconque des revendications précédentes, dans lequel le groupe échangeur de chaleur (2) et le groupe de support et de communication fluidique (3) peuvent être mutuellement reliés d'un seul tenant au moyen d'une opération de brasage, de préférence dans un autoclave.
